# FASCICULE DE BREVET EUROPEEN

(11) **EP 1 743 454 B1**
(45) Date de publication et mention de la délivrance du brevet: **07.10.2015**
(21) Numéro de dépôt: 05769405.1
(22) Date de dépôt: 03.05.2005
(51) Int. Cl.: H04L 12/24, H04L 12/26, H04W 24/08, H04L 12/721

(54) **MESURE DE PERFORMANCE DANS UN RESEAU DE TRANSMISSION DE PAQUETS**
LEISTUNGSMESSUNG IN EINEM PAKETÜBERTRAGUNGSNETZ
PERFORMANCE MEASUREMENT IN A PACKET TRANSMISSION NETWORK

(30) Priorité: 07.05.2004 FR 0404984
(43) Date de publication de la demande: 17.01.2007
(73) Titulaire: Orange, 75015 Paris (FR)
(72) Inventeur: STEPHAN, Emile, F-22560 Pleumeur Bodou (FR); SIMON, Jean-Louis, F-22300 Lannion (FR); ADAM, Yann, F-22220 Treguier (FR)
(74) Mandataire: Cabinet Plasseraud
(86) Numéro de dépôt international: PCT/FR2005/001112
(87) Numéro de publication internationale: WO 2005/122474

(56) Documents cités:
- GB-A- 761 522
- US-A- 4 607 362
- US-A- 5 477 531
- US-B1- 6 269 330
- MANDEVILLE B ET AL: "OPTIMISING IP NETWORK PERFORMANCE THROUGH ACTIVE MEASUREMENT" BRITISH TELECOMMUNICATIONS ENGINEERING, BRITISH TELECOMMUNICATIONS ENGINEERING. LONDON, GB, vol. 1, no. 2, juillet 2002 (2002-07), pages 6-13, XP001162345 ISSN: 0262-401X

## Description

La présente invention est relative au domaine des réseaux de télécommunication et plus précisément au domaine de la métrologie des réseaux de télécommunications de transmission de paquets.

La métrologie, au sens littéral « science des mesures », se développe dans différents domaines des réseaux tels que la caractérisation et la modélisation de trafic, l'analyse de trafic, ou encore l'optimisation de la qualité de service et des performances. La métrologie des réseaux est également utilisée pour améliorer la supervision d'un réseau. Elle a pour objectif notamment de fournir une aide pour le dimensionnement d'un réseau et pour le diagnostic de problèmes détectés dans un réseau.

La complexité grandissante des réseaux et notamment celle du réseau Internet entraîne une méconnaissance du trafic et des conditions d'utilisation. Il devient de plus en plus difficile d'avoir une réelle maîtrise du réseau et de son comportement.

Généralement, le trafic d'un réseau est composé de plusieurs flux de paquets. Un flux de paquets est défini comme étant un échange de données entre deux terminaux d'un réseau dont les paquets ont des caractéristiques communes, notamment des caractéristiques communes d'origine, de destination et de service.

De manière générale, la métrologie a pour objectif de déterminer des mesures à réaliser sur le trafic du réseau étudié afin d'avoir une meilleure connaissance de ce trafic.

On connaît deux grands types de mesures. Un premier type est composé de mesures réalisées sur un flux de paquets de test. Pour effectuer ces mesures dites "actives", on émet, à travers le réseau étudié, depuis un premier terminal émetteur vers un second terminal récepteur un flux de paquets de test. Généralement un paquet de test a un format spécifique contenant un premier champ indiquant une référence temporelle d'émission du paquet et un second champ indiquant le numéro de séquence du paquet dans le flux des paquets de test émis. Par conséquent, le terminal récepteur détermine un délai de transmission d'un paquet de test depuis le terminal émetteur en fonction du premier champ du paquet. Le terminal récepteur peut également détecter des pertes de paquets en fonction du second champ d'un paquet de test. Plus généralement, un paquet de test est un paquet dont on connaît une référence temporelle d'émission et que l'on sait distinguer des autres paquets en réception afin de lui associer une référence temporelle d'arrivée ou bien de déterminer si il est perdu.

On peut ainsi obtenir des caractéristiques de performance d'un flux « de bout en bout », c'est-à-dire sur le chemin complet du flux des paquets de test, depuis l'émetteur jusqu'au récepteur, et notamment des mesures de délai de transmission entre les deux terminaux, sur la base de références temporelles connues d'émission et de réception des paquets.

Ce premier type de mesure permet donc d'obtenir des mesures de performance sur un chemin complet du flux de paquets de test, c'est-à-dire entre le terminal émetteur du flux et le terminal récepteur du flux. Les mesures ainsi obtenues sont relatives aux paquets de test d'un flux. Elles sont de ce fait qualitativement précises.

Un inconvénient de ce type de mesures est qu'il ne fournit que des informations relatives aux extrémités du flux de paquets de test. Il est de ce fait impossible d'obtenir des informations sur un segment du chemin complet entre deux équipements de réseau ou encore entre un équipement de réseau et un des terminaux. Les informations ainsi obtenues sont donc géographiquement imprécises.

On connaît un deuxième type de mesures réalisées au niveau d'un équipement de réseau par une analyse des flux qui transitent par lui. Ces mesures dites "passives" peuvent être réalisées soit par des unités de mesure embarquées dans les équipements de réseau, soit par des unités de mesure externes aux équipements de réseau (ou encore sondes passives) dédiées aux mesures passives. Ces dernières disposent en général de moins d'information que les unités de mesure embarquées. Ces unités de mesure sont en écoute du trafic circulant sur les liaisons entre les équipements de réseau. Ce type de mesure passive, largement utilisé dans les réseaux existants, permet d'obtenir des informations de volumétrie par flux et par équipement de réseaux.

Un inconvénient de ce type de mesure est qu'il fournit des informations relatives à un équipement de réseau qui sont très difficile à corréler avec d'autres informations relatives à un autre équipement de réseau. Par conséquent, même s'il est toutefois possible d'obtenir par corrélation des informations topologiques relativement précises sur un segment donné, une telle corrélation reste complexe à mettre en oeuvre, notamment dans le cas où on échantillonne les flux pour les analyser.

Un autre inconvénient de ce type de mesures est qu'il ne fournit que des informations volumétriques relatives au flux par équipement de réseaux, notamment le nombre de paquets analysés ainsi que la somme des tailles des paquets analysés pour un flux donné. Par conséquent, les informations obtenues par ce type de mesures peuvent s'avérer être qualitativement insuffisantes et même peu fiables, notamment dans le cas où on échantillonne les flux pour les analyser.

Le document US 6 269 330 divulgue un système de test pour tester un réseau de communication. Ce système comprend des agents de trafic couplés à des noeuds du réseau capables de transmettre et recevoir des données. Les agents de trafic ont des générateurs de trafic qui peuvent transmettre des répétitions de séquences prédéterminées de données. Un centre de test peut ensuite faire des analyses de trafic. Toutefois, un tel système ne permet pas une analyse fine du réseau.

Ainsi, il est intéressant d'obtenir des informations qualitativement précises, c'est-à-dire relatives aux paquets d'un flux, et géographiquement précises, c'est-à-dire relatives à des segments du chemin complet du flux dans les réseaux existants.

On note que les termes « équipement de réseau » font référence à un équipement de réseau actif, c'est-à-dire qui remplit une fonction de traitement actif dans le réseau, comme par exemple les commutateurs ou encore les routeurs. Une fonction de traitement actif dans le réseau peut également se définir par opposition à une fonction de traitement passif remplie notamment par une unité de mesure.

La présente invention vise à proposer une solution tendant à satisfaire ces besoins.

Un premier aspect de l'invention propose un procédé de mesure dans un réseau de transmission de paquets de données, dans lequel un flux de paquets de données émis par un premier terminal transite via au moins un équipement de réseau auquel est associée une unité de mesure de flux ; lequel ledit premier terminal et ladite unité de mesure sont reliés à une unité de collecte ; ledit procédé comprenant les étapes suivantes : - le premier terminal émet un flux spécifique de paquets, ayant chacun une taille déterminée différente, les tailles étant telles que parmi un ensemble de r paquets, r étant un entier positif inférieur ou égal au nombre de paquets du flux, il n'y ait pas deux sous-ensembles composés du même nombre de paquets et ayant la même taille totale cumulée ;
- l'unité de mesure analyse au moins un paquet et au plus r paquets dudit flux transitant par l'équipement de réseau ;
- le premier terminal envoie une description de flux de paquets émis, comprenant une liste incluant au moins lesdites tailles déterminées des paquets émis, à l'unité de collecte ;
- l'unité de mesure de flux envoie une description de flux, comprenant au moins le nombre de paquets analysés et une somme desdites tailles déterminées des paquets analysés, à l'unité de collecte ; et
- l'unité de collecte identifie chaque paquet analysé du flux en fonction de la description de flux et desdites tailles déterminées des paquets émis pour corréler, paquet par paquet, ladite description de flux et ladite description de flux de paquets.

Un deuxième aspect de l'invention propose un système de mesure comprenant des moyens agencés pour mettre en oeuvre le procédé ci-dessus.

Un troisième aspect de l'invention propose une unité de collecte comprenant des moyens agencés pour mettre en oeuvre le procédé ci-dessus.

Grâce à ces dispositions, on peut obtenir des informations précises géographiquement et qualitativement du trafic sur le réseau de transmission étudié.

D'autres aspects, buts et avantages de l'invention apparaîtront à la lecture de la description d'un de ses modes de réalisation.

L'invention sera également mieux comprise à l'aide des dessins, sur lesquels :
- la figure 1 est un schéma de l'architecture du réseau selon un mode de réalisation de l'invention ;
- la figure 2 illustre un procédé de mesure de réseau selon un mode de réalisation de l'invention ;
- la figure 3 illustre un procédé de mesure selon un mode de réalisation de l'invention dans une architecture du réseau basée sur une unité de collecte comprenant un premier et un second module.

L'invention peut être exploitée dans tous les domaines de la métrologie appliquée aux réseaux de transmission de paquets.

L'invention propose de coupler des mesures actives et des mesures passives afin de tirer avantage de chacune d'elles. Ainsi, dans un mode de réalisation de l'invention, deux terminaux (ou sondes actives) échangent un paquet de test qui est analysé en plusieurs points du réseau, notamment sur la base des références temporelles de passage de ce paquet.

Le contexte de l'invention est celui de tout type de réseau de transmission de paquets de taille fixe et de taille variable. Afin d'illustrer la description ci-après, le réseau IP, pour « Internet Protocol », est pris en exemple, sans limiter la portée de l'invention. L'invention peut notamment être mise en oeuvre sur un protocole IP version 4 ou version 6.

L'invention s'applique aux méthodes d'analyse comprenant une sélection de paquets des flux analysés, comme par exemple un échantillonnage de flux, ou encore aux méthodes d'analyse sans sélection de paquets des flux analysés.

On note que, dans un mode de réalisation de l'invention, une unité de mesure génère des descriptions de flux comprenant des informations relatives au flux, alors qu'un terminal génère des description de flux de paquets comprenant des informations relatives à des paquets du flux.

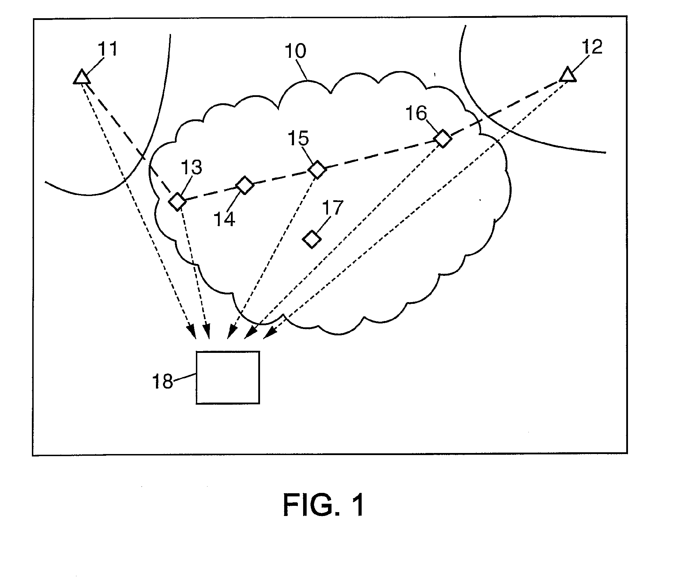

La figure 1 représente une architecture de réseau comprenant un système de mesure selon un mode de réalisation de l'invention. Un terminal 11 et un terminal 12 sont connectés au réseau IP 10. Les terminaux 11 et 12 sont adaptés pour générer des flux de paquets de test. Le réseau IP 10 comprend des équipements respectivement référencés 13, 14, 15, 16 et 17. Parmi ces équipements, les équipements 13, 15 et 16 sont chacun pourvus d'une unité de mesure de flux embarquée. Les unités de mesure comprennent une fonction d'exportation de mesures. L'invention couvre également une configuration dans laquelle l'unité de mesure de flux est une entité extérieure et en écoute du trafic transitant sur un lien de transmission entre les équipements de réseau.ou un terminal et un équipement. Les terminaux 11 et 12 ainsi que les équipements comprenant des unités de mesure de flux 13, 15 et 16 sont reliés à une unité de collecte 18. Cette unité de collecte est destinée à recevoir les différentes informations exportées par les unités de mesures et les terminaux 11 et 12 afin de les regrouper et de les corréler pour fournir des informations précises, relatives aux paquets de test du flux et correspondantes à des segments déterminés du chemin complet du flux, notamment des informations de performance relatives à la perte de paquets ou au délai de transmission de paquets.

Les terminaux 11 et 12 peuvent être des terminaux fixes. Ils peuvent également être des terminaux mobiles.

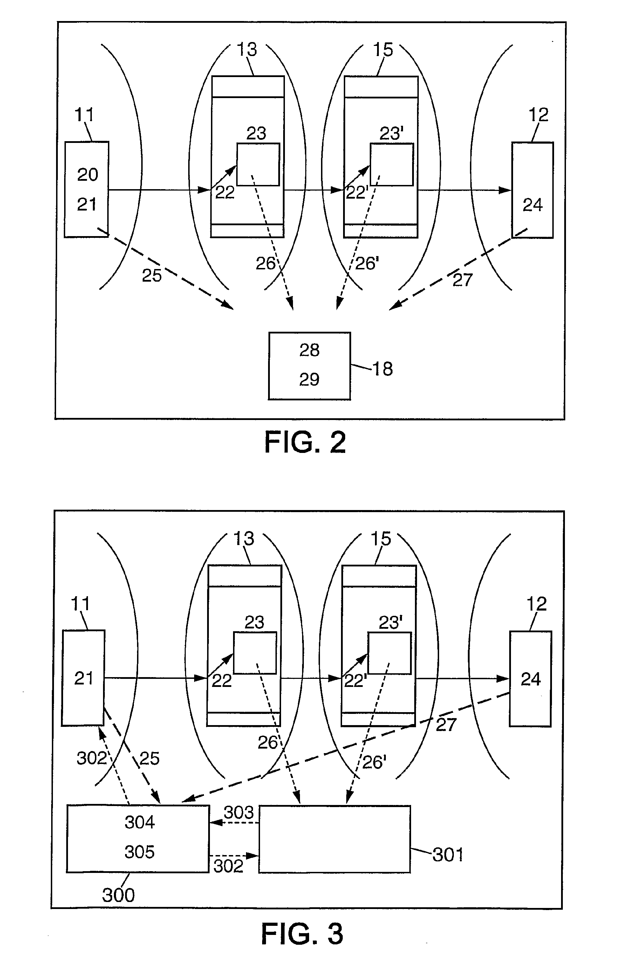

On note que dans un mode de réalisation de l'invention illustré dans la figure 3, les terminaux sont reliés à un premier module d'une unité de collecte alors que les unités de mesure associées à un équipement de réseau sont reliées à un second module d'une unité de collecte. Dans certains cas décrits par la suite, une telle architecture est plus avantageuse.

Dans un mode préféré de réalisation de l'invention, les unités de mesure de flux embarquées dans les équipements 13, 15, 16 mettent en oeuvre des fonctions d'analyse de flux du genre de celles en cours de normalisation nommées 'IPFIX' dont une implémentation est distribuée par la société Cisco Systems, Inc. sous l'appellation « Netflow ». Un service de type « IPFIX » est un service global d'analyse de flux transitant par des équipements de réseaux de transmission de paquets, notamment des routeurs et des commutateurs de type IP, ATM, Ethernet ou encore MPLS (pour Multiple Protocole Lable Switch).. Un tel service fournit une analyse des flux entrant dans un équipement. Il est également adapté pour accumuler des mesures statistiques relatives à un flux donné ainsi que pour exporter de manière asynchrone ces mesures vers une unité de collecte 18. L'exportation des mesures vers l'unité de collecte est de préférence réalisée par encodage des données afin de réduire la bande passante nécessaire. Une telle exportation des mesures peut être réalisée au fil de l'eau, sur expiration d'un temporisateur, ou sur détection d'une fin de flux. Une unité de mesure peut aussi stocker ces mesures de manière à permettre à l'unité de collecte 18 de les télécharger.

L'invention couvre toute autre fonction d'analyse d'une unité de mesure fournissant des informations de flux et toute autre méthode d'exportation de ces informations de flux.

Dans les sections suivantes, par souci de clarté et à titre d'exemple, les équipements de réseau pourvus d'une unité de mesure de flux sont des routeurs. L'invention couvre également un système de mesure de flux dans lequel les équipements de réseau pourvus d'une unité de mesure de flux sont d'autres équipements de réseau, comme par exemple des commutateurs.

Généralement, un flux de paquets de test, émis par le terminal 11 à destination du terminal 12, est identifié par les informations suivantes :
- l'adresse IP, notée T11_SrcAddr, et le port logique, noté T11_SrcPort, du terminal émetteur 11 ;
- l'adresse IP, notée T12_DstAddr, et le port logique, noté T12_DstPort, du terminal récepteur 12 ;
- le protocole utilisé, noté Proto_test, par exemple TCP pour « Transmission Control Protocol », UDP pour « User Datagram Protocol », ou encore ICMP pour « Internet Control Message Protocol ».

Le protocole de test utilisé peut être n'importe quel protocole encapsulé au-dessus de la couche de protocole IP.

Un équipement de réseau pourvu d'une unité de mesure de flux est en mesure de fournir les descriptions de flux comprenant, de préférence:
- un champ pour le numéro d'interface d'entrée et de sortie, respectivement noté 'Input' et 'Output' ;
- un champ pour le nombre de paquets analysés et comptabilisés pour un flux, noté 'Packets' ;
- un champ pour le nombre d'octets de la couche protocolaire IP correspondant aux paquets analysés du flux, noté 'Octets' ;
- un champ pour une référence temporelle de passage du premier paquet analysé dans le flux et un champ pour une référence temporelle de passage du dernier paquet analysé dans ce flux, respectivement noté 'First' et 'Last' ;
- un champ pour l'adresse IP de l'interface d'entrée du prochain routeur, notée 'NextHop'.

Lorsqu'un tel équipement est un routeur, une description de flux comprend en outre de préférence, un champ pour les numéros de domaines administratifs, ou AS pour « Autonomous System », traversés, respectivement notés 'SrcAS' et 'DstAS'.

Une unité de mesure d'un routeur stocke des données relatives aux flux qui traversent ce routeur. Sur réception d'un paquet, l'unité de mesure détermine si le paquet appartient à un flux en cours d'analyse. S'il appartient à un flux en cours d'analyse, les champs correspondant au nombre de paquets analysés pour ce flux, à la somme des tailles des paquets analysés, et à la référence temporelle de passage du dernier paquet analysé, respectivement les champs 'Packets', 'Octets' et 'Last', sont mis à jour. Si le paquet reçu n'appartient pas un flux en cours d'analyse, l'unité de mesure du routeur initie une analyse pour ce flux, en stockant, entre autre, une référence temporelle de passage du premier paquet de flux dans le champ 'First'. L'unité de mesure du routeur termine l'analyse d'un flux sur détection de la fin du flux.

Une unité de mesure est en général adaptée pour exporter les données stockées soit lorsque la fin du flux est détectée, ou encore avant la fin du flux en cours d'analyse, lorsqu'un certain temps s'est écoulé depuis l'initiation de l'analyse du flux.

Les données stockées relatives à l'analyse d'un flux sont alors encodées pour être exportées vers l'unité de collecte 18 sous la forme de tickets de description de flux. Plusieurs tickets de description de flux relatifs à plusieurs flux étudiés peuvent être groupés en un bloc de description de flux, comme cela est illustré ci-après.

Outre les données techniques nécessaires au décodage d'un ticket de description par l'unité de collecte 18, notamment un champ noté 'Version' identifiant une version logicielle du service de type IPFIX, l'en-tête d'un ticket de description de flux indique également, de préférence, une référence temporelle du routeur. Des champs notés 'SysUptime' et 'UnixSecs' permettent de déduire à quel moment a été créé le ticket de description de flux. Un champ noté 'FlowSequence' permet la détection de pertes de tickets de description de flux. La table 1 ci-dessous décrit le format de l'en-tête des tickets de description de flux exportés, selon un mode de réalisation de l'invention.

**Table 1**

| Octets | Nom du Champ | Description |
|---|---|---|
| 0-1 | Version | Numéro de Version de IPFIX |
| 2-3 | Count | Nombre de flux exportés dans ce paquet (1-30) |
| 4-7 | SysUptime | Nombre de millisecondes écoulées depuis le démarrage de la machine |
| 8-11 | UnixSecs | Nombre de secondes écoulées depuis le 1^{er} janvier 1970: Timestamp Unix |
| 12-15 | UnixNSecs | Nombre de nanosecondes résiduelles depuis le 1^{er} janvier 1970 |
| 16-19 | FlowSequence | Compteur du nombre total de flux exportes |
| 20-23 | Reserved | Octets réservés |

Dans cette table le champ 'Reserved' peut être utilisé pour décrire des informations comme l'émetteur (engine_'type' et id') et une methode d'échantillonnage (sampling_interval).

Chaque flux est de préférence décrit dans un ticket de description de flux tel que détaillé dans la table 2 ci-après, comprenant notamment des informations relatives aux domaines administratifs, ou AS pour « Autonomous System » et relatives au Type de Service, ou Tos, équivalent à une Qualité de Service, ou QoS.

**Table 2**

| Nom du Champ | Octets | Description |
|---|---|---|
| SrcAddr | 0-3 | Adresse IP Source |
| DstAddr | 4-7 | Adresse IP Destination |
| NextHop | 8-11 | Adresse IP du prochain routeur |
| Input | 12-13 | Index SNMP de l'interface d'entrée |
| Output | 14-15 | Index SNMP de l'interface de sortie |
| Packets | 16-19 | Nombre de paquets analysés dans le flux |
| Octets | 20-23 | Nombre total d'octets dans les paquets analysés du flux |
| First | 24-27 | Référence temporelle de début de flux |
| | | Flux |
| Last | 28-31 | Référence temporelle de fin de flux |
| SrcPort | 32-33 | Port Source TCP/UDP ou équivalent |
| DstPort | 34-35 | Port Destination TCP/UDP ou équivalent |
| Pad1 | 36 | Non utilisé (zéro) |
| TcpFlags | 37 | Flags ou cumulé des flags TCP |
| Proto | 38 | Type de Protocole IP (exemple TCP=6 ;UDP=17) |
| Tos | 39 | Type de service IP |
| SrcAS | 40-41 | Numero d'AS de la Source |
| DstAS | 42-43 | Numero d'AS de la Destination |
| SrcMask | 44 | Masque de l'adresse IP Source |
| DstMask | 45 | Masque de l'adresse IP Destination |
| Pad2 | 46-47 | Non utilisé (zéro) |

Chaque flux peut également être décrit par un ticket de description de flux ne comprenant qu'une partie seulement des informations listées ci-dessus.

Les blocs de descriptions de flux groupant des tickets de description de flux sont en général envoyés par les unités de mesure à une unité de collecte sous la forme d'un datagramme UDP. Un datagramme UDP de 1464 octets, correspondant à une trame Ethernet de 1500 octets, peut contenir jusqu'à 30 tickets de description de flux.

Un service de type IPFIX, implémenté sous la forme d'un logiciel, ne permet pas, en général, d'analyser tous les paquets transitant par un équipement de réseau, pour des raisons de performance. L'unité de mesure réduit donc le nombre de paquets à analyser en sélectionnant certains paquets dans le flux de paquets étudié. L'invention couvre tout type de sélection de paquets dans un flux. Dans un mode de réalisation de l'invention, la sélection de paquets à analyser est réalisée par échantillonnage du flux étudié. Ensuite, les unités de mesures exportent les informations de flux, comme détaillées dans la table 2, vers l'unité de collecte 18.

Comme cela a été précédemment dit, des paquets de test sont injectés dans le réseau. En effet, le terminal 11 émet un flux de paquets de test à destination du terminal 12 à travers le réseau 10. Le flux de paquets de test transite de ce fait via au moins certains des équipements du réseau 10. Lors du passage des paquets de test dans les équipements de réseaux pourvus d'une unité de mesure, tous les paquets de test ou seulement une partie des paquets de test du flux sont analysés.

Dans un mode de réalisation de l'invention, pour chaque flux étudié, les informations de flux de chaque unité de mesure comprennent au moins le nombre de paquets de test analysés ainsi que la somme des tailles des paquets de test analysés dans le flux.

Par ailleurs, les terminaux 11 et 12 envoient chacun à l'unité de collecte 18 une description de flux de paquets émis, respectivement reçus, du flux. Cette description comprend, de préférence, une liste incluant au moins les tailles des paquets de test émis, respectivement reçus. Cette description peut en outre avantageusement comprendre une référence temporelle associée à l'émission, respectivement la réception, de chaque paquet, comme cela est décrit plus en détail dans les sections suivantes.

Dans un mode de réalisation de l'invention, le flux de paquets de test émis par le terminal 11 à destination du terminal 12 comprend une séquence spécifique de paquets, chacun ayant une taille différente et déterminée, de telle sorte que l'on puisse identifier chacun des paquets d'un sous ensemble de la séquence spécifique en fonction, d'une part, du nombre de paquets du sous-ensemble et, d'autre part, de la somme des tailles des paquets du sous ensemble. Ces deux critères déterminés du flux spécifique de test permettent notamment d'identifier les paquets analysés par une unité de mesure donnée dans le cas où le flux de test est analysé par échantillonnage (ou tout autre sélection de paquets). En effet, dans ce dernier cas, seul un sous-ensemble de la séquence spécifique des paquets de test est analysé.

Un mode de réalisation de la présente invention basé sur l'émission d'une séquence de paquets présentant les critères déterminés est décrit ci-après. La génération d'une telle séquence de paquets est fondée sur une notion mathématique de séries de nombres à sommes partielles différentes d'ordre r. Une série de n nombres à sommes partielles différentes d'ordre r, n étant un entier positif et r étant un entier positif inférieur ou égal à n, est définie par les caractéristiques suivantes :
- les nombres de la série sont tous différents ;
- les sommes de deux nombres de la série sont toutes différentes ;
- les sommes de trois nombres de la série sont toutes différentes ;
- ....
- les sommes de r nombres de la série sont toutes différentes.

Dans une telle série de nombres, on peut donc identifier chaque nombre d'un sous-ensemble des nombres de la série en fonction d'une part du nombre d'éléments du sous-ensemble et d'autre part de la somme des nombres du sous-ensemble.

Ainsi, en générant un flux de paquets dont les tailles remplissent les critères d'une série de nombres à sommes partielles différentes d'ordre r, telle que définie ci-dessus, l'unité de collecte 18 est en mesure d'identifier chaque paquet analysé par une unité de mesure, lorsque le nombre de paquets analysés par cette unité de mesure est inférieur ou égal à r. En effet, l'unité de collecte reçoit du terminal émetteur 11 la liste des tailles des paquets du flux émis. Puis elle reçoit d'une unité de mesure le nombre de paquets analysés ainsi que la somme des tailles des paquets analysés. Etant donné que chaque somme de tailles est unique pour tous les sous ensembles d'un nombre de paquets donné, l'unité de collecte identifie donc la taille de chaque paquet analysé en fonction du nombre de paquets analysés. Puis comme les paquets du flux spécifique de test sont de tailles différentes, on peut en conséquence facilement identifier chaque paquet analysé.

On connaît ainsi un moyen de générer un ensemble de paquets ayant chacun une taille différente pour lequel on identifie de manière unique chaque paquet de n'importe quel sous-ensemble de cet ensemble de paquets par le nombre et par la somme des tailles des paquets du sous-ensemble.

Soit Sn, une séquence de n paquets Pi de taille différente notée Ti, pour n entier positif et i entier positif compris entre 1 et n.

Par exemple, une séquence de 6 paquets de tailles respectives T1=1, T2=2, T3=3, T4=4, T5=6 et T6=7 ne remplit pas les critères déterminés décrits ci-dessus, puisqu'il n'est pas possible de déterminer de manière unique un sous-ensemble dont le nombre de paquets est 2 et dont la somme des tailles des paquets est égale à 7. En effet, le sous-ensemble {T3 ; T4} et le sous-ensemble {T1 ; T5} correspondent à ces deux paramètres.

La table ci-après illustre des exemples d'une séquence de paquets comprenant 4 paquets de taille respectivement indiquée dans les colonnes 1, 2, 3 et 4. Dans un tel exemple, le nombre de paquets d'un sous-ensemble peut-être un, deux, trois ou quatre. On notera que le cas où le sous-ensemble comprend un seul paquet et le cas où le sous-ensemble comprend quatre paquets sont triviaux, puisque dans le premier cas on identifie le seul paquet par sa taille et dans le dernier cas le sous-ensemble correspond à l'ensemble complet. Dans la cinquième colonne, 0 indique qu'il n'est pas possible d'identifier de manière unique les paquets d'un sous-ensemble de deux paquets en fonction de la somme des tailles des paquets du sous-ensemble considéré, alors que 1 indique le contraire. Dans la sixième colonne, 1 indique qu'il est possible d'identifier de manière unique les paquets d'un sous-ensemble de trois paquets en fonction de la somme des tailles des paquets du sous-ensemble considéré. Une séquence de paquets correspond à un mode de réalisation de l'invention lorsque, quelque soit la taille des sous-ensembles de paquets, on peut identifier de manière unique les paquets composant ce sous-ensemble. Ainsi, dans la septième colonne, 1 indique que la séquence des paquets étudiée peut être utilisée dans un mode de réalisation de l'invention correspondant à r égal 4, alors que 0 indique le contraire.

**Table 3**

| Colonne 1 | Colonne 2 | Colonne 3 | Colonne 4 | Colonne 5 | Colonne 6 | Colonne 7 |
|---|---|---|---|---|---|---|
| 1 | 2 | 3 | 4 | 0 | 1 | 0 |
| 1 | 2 | 3 | 5 | 1 | 1 | 1 |
| 1 | 2 | 4 | 5 | 0 | 1 | 0 |
| 1 | 3 | 4 | 5 | 1 | 1 | 1 |
| 2 | 3 | 4 | 5 | 0 | 1 | 0 |
| 1 | 2 | 3 | 6 | 1 | 1 | 1 |
| 1 | 2 | 4 | 6 | 1 | 1 | 1 |
| 1 | 2 | 5 | 6 | 0 | 1 | 0 |
| 1 | 3 | 4 | 6 | 0 | 1 | 0 |
| 1 | 3 | 5 | 6 | 1 | 1 | 1 |
| 1 | 4 | 5 | 6 | 1 | 1 | 1 |
| 2 | 3 | 4 | 6 | 1 | 1 | 1 |
| 2 | 3 | 5 | 6 | 0 | 1 | 0 |
| 2 | 4 | 5 | 6 | 1 | 1 | 1 |
| 3 | 4 | 5 | 6 | 0 | 1 | 0 |
| 1 | 2 | 3 | 7 | 1 | 1 | 1 |
| 1 | 2 | 4 | 7 | 1 | 1 | 1 |
| 1 | 2 | 5 | 7 | 1 | 1 | 1 |
| 1 | 2 | 6 | 7 | 0 | 1 | 0 |
| 1 | 3 | 4 | 7 | 1 | 1 | 1 |
| 1 | 3 | 5 | 7 | 0 | 1 | 0 |
| 1 | 3 | 6 | 7 | 1 | 1 | 1 |
| 1 | 4 | 5 | 7 | 1 | 1 | 1 |
| 1 | 4 | 6 | 7 | 1 | 1 | 1 |
| 1 | 5 | 6 | 7 | 1 | 1 | 1 |
| 2 | 3 | 4 | 7 | 1 | 1 | 1 |
| 2 | 3 | 5 | 7 | 1 | 1 | 1 |
| 2 | 3 | 6 | 7 | 0 | 1 | 0 |
| 2 | 4 | 5 | 7 | 0 | 1 | 0 |
| 2 | 4 | 6 | 7 | 1 | 1 | 1 |
| 2 | 5 | 6 | 7 | 1 | 1 | 1 |
| 3 | 4 | 5 | 7 | 1 | 1 | 1 |
| 3 | 4 | 6 | 7 | 0 | 1 | 0 |
| 3 | 5 | 6 | 7 | 1 | 1 | 1 |
| 4 | 5 | 6 | 7 | 0 | 1 | 0 |

Une séquence spécifique de n paquets, dont les tailles sont notées {T1, ..., Ti,...Tn}, remplissant les critères déterminés tels que définis ci-dessus, peut se décliner aisément en une autre séquence spécifique de paquets présentant également ces même critères déterminés.

En effet, on génère une séquence spécifique de n paquets de tailles respectivement notées {D1, ...,Di, .., Dn} de telle sorte que :
Di = Ti+ A, pour i égal 1 à n, et pour A entier positif.

Une telle séquence présente les critères déterminés.

On peut également obtenir une séquence spécifique de n paquets de tailles respectivement notées {M1, ...,Mi, .., Mn} de telle sorte que :
Mi = B*Ti, pour i égal 1 à n, et pour B entier positif.

Une séquence de nombre ainsi obtenue présente également les critères déterminés tels que définis ci-dessus.

Une telle série de nombres peut être déterminée par un algorithme de recherche vérifiant pour les séries de nombre existant si les deux critères déterminés sont remplis. On considère une série de N nombres puis on calcule les sommes partielles pour tous les sous-ensembles de toutes les tailles. On sélectionne ainsi des séries remplissant les critères déterminés. On notera que plus le nombre N est grand, plus il y a de combinaisons à tester.

De préférence, une telle série est déterminée par un algorithme de type récursif. En effet, à partir d'une série de nombre remplissant les critères déterminés, on recherche un élément supplémentaire à lui ajouter afin que la nouvelle suite ainsi obtenue remplisse encore les deux critères déterminés. En appliquant un tel algorithme, on limite très sensiblement les calculs.

Ainsi, la table ci-dessous illustre des séries de nombres à sommes partielles différentes d'ordre r obtenues par récursivité à partir d'une série initiale remplissant les critères déterminés :
{1, 2, 3, 5}.

**Table 4**

| r=2 100 éléments | r=3 100 éléments | r=4 | r=5 | r=6 | r=7 | r=8 |
|---|---|---|---|---|---|---|
| 1,2,3,5,8,13,21,30,39, 53,74,95,128,152,182, 212,258,316,374,413, 476,531,546,608,717, 798,862,965,1060,1161, 1307,1386,1435,1556, 1722,1834,1934,2058,2261, 2497,2699,2874,3061,3197, 3332,3629,3712,3868,4140, 4447,4640,5022,5065,5323, 5614,6004,6274,6494,6642, 6980,7276,7588,8018,8374, 9072,9168,9761,10106, 10490,11110,11375,11517, 12102,12331,12868,13427, 13924,14536,14912,15470, 15905,16137,16901,17042, 17823,19422,19934,20289, 20997,21492,22066,22613, 22660,23725,24400,24970, 25361,26072,26681,27602 | 1,2,3,5,8,14,22,30,40, 55,70,100,131,155, 189,212,235,271,348, 391,435,479,542,593, 664,754,838,902,1008, 1057,1153,1296,1390, 1464,1608,1826,1964, 2102,2248,2472,2545, 2707,3008,3091,3365, 3492,3784,4104,4319, 4518,4636,4963,5273, 5449,5627,5699,5993, 6306,6718,7416,7678, 7930,8191,8611,8839, 9031,9632,9835,9974, 10359,10957,11563, 11980,12335,12498, 12783,13066,13562, 13787,14376,15433, 15925,46035,16964, 17356,17915,18554, 19555,20034,20100, 21403,21702,22468, 22839,23781,24571, 25315,26078,26475, 27365 | 1,2,3,5,8,14, 25,45,70,85, 132,151,221, 237,325,346, 436,508,593, 607,746,824, 932,968,1126, 1153,1377, 1405,1552, 1578,1817, 1915,2079, 2172,2356, 2453,2565, 2795,2843, 3107,3249, 3475,3589, 3703,3858, 3973,4278, 4562,4570, 5047,5086, 5567,5662, 5735,6227, 6562,6614, 6909,7276, 7458,7612 | 1,2,3,5,8,14, 25,45,85,162, 257,346,542, 648,876,1360, 1483,1865, 2503,2648, 3682,3807, 4701,5898, 5971,7545, 8005,9220, 11333,11644, 13544,13663, 16359,16713, 19562,20654, 22894,26115, 26675,30075, 30116,34569 | 1,2, 3, 5, 8, 14, 25, 45, 85, 162, 310, 595, 986, 1416, 2106 | 1,2, 3, 5,8, 14, 25, 45, 85, 162, 310, 506, 1187, 2318, 3910 | 1,2, 3,5, 8,14, 25,45, 85,162, 310, 606, 1187, 2349, 4593, 9013, 15529, 24744, 35080 |

La présente invention couvre tout autre méthode de génération de séries à sommes partielles différentes d'ordre r.

Ainsi de préférence, le terminal 11 est adapté pour générer une ou plusieurs séquences de paquets de test différentes telles que décrites précédemment. Le terminal 11 peut également être adapté pour recevoir d'un équipement externe de contrôle des commandes de sélection d'une séquence de paquets à émettre.

Puis, l'unité de collecte 18 reçoit d'un côté des informations relatives aux paquets émis et reçus par les terminaux, et notamment la taille de chaque paquet de test, via les descriptions de flux de paquets, et d'un autre côté des informations relatives au flux, et notamment le nombre et la somme des tailles des paquets analysés. Elle est par conséquent en mesure d'identifier chaque paquet ayant été analysé dans une unité de mesure et donc de calculer, le cas échéant, une perte de paquets de test relative à un segment défini entre un terminal et un équipement ou entre deux équipements de réseau, comme cela est détaillé dans une section suivante. On notera que ces derniers calculs sont possibles dans le cas où le flux de paquets de test complet est analysé ou encore dans le cas où seuls certains paquets du flux de test sont sélectionnés pour être analysés.

Dans un mode de réalisation de la présente invention, le terminal 11 envoie une référence temporelle de l'émission de chaque paquet Pi à l'unité de collecte de mesure 18, dans une description de flux de paquets.

Dans un mode de réalisation de l'invention, la somme des tailles des paquets analysés et les références temporelles de passage des premier et dernier paquets analysés sont envoyées à l'unité de collecte dans les descriptions de flux, et plus précisément dans les champs respectivement notés 'octets', 'First' et 'Last'.

Ainsi, l'unité de collecte 18 reçoit en outre, des références temporelles d'émission et de réception des paquets de test via les descriptions de flux de paquets envoyées par les terminaux, et une référence temporelle de passage du premier et du dernier paquet analysés de chacune des entités de mesure des équipements de réseau, via les descriptions de flux. Elle est par conséquent en mesure de fournir également un délai de transmission de paquet relatif à un segment, comme cela est détaillé dans une section suivante.

On notera que pour identifier les paquets analysés par une unité de mesure donné, l'ordre de d'émission des paquets n'est pas important. En revanche, pour des calculs de délai de transmission de paquets, on associe la valeur comprise dans le champ 'First' au premier paquet analysé et la valeur comprise dans le champ 'Last' au dernier paquet analysé. Il est important de connaître l'ordre d'émission et de transmission pour réaliser cette association.

La séquence de paquets de test émis remplissant les critères déterminés, l'unité de collecte identifie les paquets analysés. Afin d'optimiser une telle identification, l'unité de collecte maintient de préférence une ou plusieurs tables d'identification de paquets dans le flux construite sur la base des informations de la description de flux de paquets émis envoyée par le terminal 11, comme cela est décrit par la suite.

Plus généralement, l'unité de collecte 18 est en mesure de fournir des informations instantanées suivantes :
- des informations relatives au chemin des paquets du flux dans le réseau ; comme par exemple une liste d'un ou plusieurs équipements par lesquels les paquets analysés transitent ;
- des informations relatives à la gestion des équipements du chemin du flux dans le réseau, comme par exemple une liste d'adresses de gestion d'un ou plusieurs équipements par lesquels les paquets analysés transitent ;
- des informations relatives au traitement du flux dans les équipements du chemin, comme par exemple une liste de niveaux de qualité de service appliqués par un ou plusieurs équipements aux paquets analysés ; ou encore une liste de domaines administratifs traversés par le flux ;
- des informations de performance du réseau relatives à une perte de paquets sur un segment entre un des terminaux et un équipement ou entre deux équipements et/ou à un délai de transmission de paquets relatif à un segment entre un des terminaux et un équipement ou entre deux équipements.

Dans certaines conditions, il peut s'avérer très utile de réitérer successivement les étapes d'émission de flux de paquets de test par le terminal 11, d'analyse de flux dans les équipements de réseau et de réception de flux par le terminal 12. Dans de telles conditions l'unité de mesure peut fournir par itération et par corrélation des informations obtenues à chaque itération, relativement à un segment entre un des terminaux et un équipement ou entre deux équipements, des statistiques sur des mesure de performance telles que celles définies à l'IETF, pour « Internet Engineering Task Force », ou à l'ITU, «pour « International Télécommunication Union », comme par exemple: une durée moyenne entre deux pertes de paquets :
- une perte de paquets;
- un délai de transmission de paquets ; et
- une variation de délai de transmission.

Une réitération du procédé de mesure est très utile également dans le cas où l'analyse est réalisée sur des paquets sélectionnés du flux de test, par échantillonnage par exemple.

Ainsi, après réitération des étapes, l'unité de collecte est en mesure de fournir, par corrélation des données obtenues à chaque itération, de manière plus précise et exhaustive les informations suivantes :
- des informations relatives au chemin des paquets du flux dans le réseau ; comme par exemple une liste d'un ou plusieurs équipements par lesquels les paquets analysés transitent ;
- des informations relatives à la gestion des équipements du chemin du flux dans le réseau, comme par exemple une liste d'adresses de gestion d'un ou plusieurs équipements par lesquels les paquets analysés transitent ;
- des informations relatives au traitement du flux dans les équipements du chemin, comme par exemple une liste de niveaux de qualité de service appliqués par un ou plusieurs équipements aux paquets analysés ; ou encore une liste de domaines administratifs traversés par le flux ;
- des informations de performance du réseau relatives à une perte de paquets sur un segment entre un des terminaux et un équipement ou entre deux équipements et/ou à un délai de transmission de paquets relatif à un segment entre un des terminaux et un équipement ou entre deux équipements.

On notera que la réitération des étapes s'avère être particulièrement avantageuse dans le cas où l'analyse est réalisée sur des paquets sélectionnés du flux de test, par échantillonnage par exemple. En effet, certains vecteurs instantanés peuvent dans ce cas fournir une information incomplète.

On entend par les termes 'vecteur' le résultat orienté d'une mesure entre deux points. Un vecteur de mesure de bout en bout peut s'obtenir à partir des vecteurs de segments du chemin de bout en bout. En revanche, dans le cas où l'analyse est réalisée sur tous les paquets du flux de test, les données listées ci-dessus, peuvent être obtenues par corrélation sans réitération.

La figure 2 illustre un procédé de mesure de réseau selon un mode de réalisation de l'invention.

Le flux de paquets de test émis par le terminal 11 vers le terminal 12 traverse les équipements 13 et 15, chacun étant doté d'une unité de mesure de flux comprenant une fonction d'exportation d'informations de flux de type IPFIX. Dans la description ci-après, les unités de mesures échantillonnent le flux de paquets de test avant de réaliser l'analyse du flux. L'invention couvre d'autres procédés de sélection de paquets dans un flux.

Dans un mode de réalisation de l'invention, les unités de mesures échantillonnent, gèrent et stockent les descriptions de flux dans une table des caractéristiques de flux. La structure des entrées de cette table est analogue à la structure décrite précédemment dans la table 2. Suivant le type de service du flux analysé, le niveau fonctionnel de l'analyse ou encore le type de l'équipement de réseau, cette table peut disposer de champs supplémentaires ou inversement, certains des champs déjà listés peuvent ne pas être renseignés.

Dans un cas général, un réseau comprend un nombre entier N d'équipements. Les descriptions de flux sont envoyées à l'unité de collecte 18 à partir d'une des adresses IP de l'équipement Ei, notée Ei_SrcAddrMgt.

Les paquets du flux IP, émis par le terminal 11 vers le terminal 12, sont donc observés lors de leur passage dans les équipements Ei.

Ainsi, le procédé de mesure comprend les étapes suivantes :
- étape 20 : Choix de la séquence de paquets de test à émettre ; cette étape peut être réalisée par le terminal ou encore sur réception d'une commande externe ;
- étape 21 : Envoi de la séquence de paquets de test du terminal 11 au terminal 12;
- étape 22, 22' : Sélection des paquets de test et analyse du flux sur la base des paquets sélectionnés par les unités de mesure des équipements Ei ; au cours de cette étape de sélection, on date également chaque paquet de test sélectionné en lui associant une référence temporelle ;
- étape 23, 23' : Analyse des paquets sélectionnés et classement dans une entrée correspondant au flux de la table des caractéristiques de flux, puis stockage d'une référence temporelle de passage du premier et du dernier paquet analysé dans les champs notés 'First' et 'Last';
- étape 24: Réception de la séquence de paquets de test par le terminal 12;
- étape 25 : Envoi de la description de flux de paquets de test par le terminal 11 vers l'unité de collecte 18;
- étape 26, 26' : Sur détection de fin de flux (inactivité du flux par exemple), exportation des descriptions de flux par les équipements Ei vers l'unité de collecte 18 ;
- étape 27 : Envoi de la description de flux de paquets de test par le terminal 12 vers l'unité de collecte 18;
- étape 28 : Regroupement et corrélation des données relatives à ce flux par l'unité de collecte 18;
- étape 29 : Production des vecteurs des informations relatives à des équipements du chemin du flux ou à des segments du chemin empruntés par les paquets de ce flux.

Les sections suivantes détaillent chacune des étapes du procédé de mesure citées ci-dessus.

Dans l'étape 20, le contrôleur du système de mesure choisi un flux spécifique de paquets parmi un ensemble de flux de test, noté T11_Sn. T11_Sn est par exemple une série d'ordre 6, c'est-à-dire que si une unité de mesure analyse au plus 6 paquets de ce flux, l'unité de collecte est en mesure d'identifier chaque paquet analysé. T11_Sn est de préférence une liste comprenant une liste des tailles de paquets du flux de test.

Dans l'étape 21, le terminal 11 émet vers le terminal 12 un flux composé d'une séquence de paquets dont la somme des tailles permet d'identifier les paquets analysés à partir du nombre de paquets analysés. La séquence de paquets de test est une séquence, notée T11_Sn, de paquets {P0, P1, P2,...,Pn-1}. La somme des tailles des paquets de la liste T11_Sn est notée T11_Sum_Sn.

Le terminal 11 mémorise l'instant d'émission, noté T11_Pit0, de chaque paquet Pi du flux afin d'être en mesure de fournir une description de flux de paquets.

Dans l'étape 22, 22', une unité de mesure d'un équipement Ei sélectionne des paquets de ce flux pour les analyser.

La liste des paquets Pk analysés par un équipement Ei est notée Ei_Sk. Le nombre d'éléments de la liste Ei_Sk est noté Ei_Size_Sk, et correspond à la valeur du champ 'Packets' contenu dans les descriptions de flux envoyées par l'équipement Ei à l'unité de collecte 18.

La somme des tailles des paquets de la liste Ei_Sk est notée Ei_Sum_Sk et correspond à la valeur du champ 'Octets' contenu dans les descriptions de flux envoyées par l'équipement Ei.

Il est à noter que deux équipements analysent rarement le même paquet. Il existe d'autres techniques de sélection, en cours de normalisation, à l'IETF, qui permettent de sélectionner les mêmes paquets dans différents points de passage du réseau.

Dans l'étape 23, 23', l'unité de mesure de flux de chaque équipement Ei analyse un paquet de test sélectionné et ajoute les caractéristiques de ce paquet aux caractéristiques déjà stockées dans la table des caractéristiques de flux, relativement au flux de ce paquet.

L'unité de mesure gère une table dans laquelle chaque entrée correspond à un flux. Si une entrée n'existe pas pour un flux donné, identifié par les données T11_SrcAddr, T11_SrcPort, T12_DstAddr, T12_DstPort, Proto_test, alors elle est créée suivant les étapes suivantes :
- une référence temporelle de passage du premier paquet de test analysé dans ce flux est stockée dans le champ 'First' de l'entrée de la table;
- l'adresse IP du terminal 11, T11_SrcAddr, est stockée dans le champ 'SrcAddr' de l'entrée de la table;
- le port TCP ou UDP du terminal 11, T11_SrcPort, est stocké dans le champ 'SrcPort' de l'entrée de la table;
- l'adresse IP du terminal 12, T12_DstAddr, est stockée dans le champ 'DstAddr' de l'entrée de la table;
- le port TCP ou UDP du terminal 12, T12_DstPort, est stocké dans le champ DstPort de l'entrée de la table;
- les valeurs des autres champs de l'entrée de la table sont complétées à partir d'informations de routage ou de commutation de paquets.

Sur réception d'un paquet, le nombre d'octets du paquet de test est ajouté à la valeur du champ 'Octets' de l'entrée de la table, puis le champ 'Packets' de l'entrée de la table est augmenté de 1.

Une référence temporelle de passage du paquet est stockée dans le champ 'Last' de l'entrée de la table.

Dans l'étape 24, le terminal 12 reçoit le flux de paquet dont certains paquets peuvent être perdus. Il stocke une référence temporelle de réception et la taille de chaque paquet afin de préparer une description de flux de paquets reçus.

La liste complète des paquets Pk reçus par le terminal 12 est référencée T12_Sk. Une telle liste comprend de préférence une liste des tailles des paquets du flux de test. Le nombre d'éléments de la liste T12_Sk est noté T12_Size_Sk et correspond à la valeur du champ 'Packets' de la description de ce flux produite par le terminal 12.

La somme des tailles des paquets de la liste T12_Sk est notée T12_Sum_Sk. T12_Sum_Sk correspond à la valeur du champ 'Octets' de la description de flux de paquets produite par le terminal 12.

Dans l'étape 25, le terminal 11 produit une description de flux de paquets émis qu'il envoie à l'unité de collecte 18. Une telle description contient, de préférence, au moins les informations suivantes:

**Table 5**

| | |
|---|---|
| SrcAddr | T11_SrcAddr |
| DstAddr | T12_DstAddr |
| NextHop | E1_Addr |
| Packets | n |
| Octets | T11_Sum_Sn |
| Rackets_lisp | T11_Sn |
| times | {T11_P0t0, T11_P1t0, T11_P2t0, ..., T11_Pn-1t0} |
| SrcPort | T11_SrcPort |
| DstPort | T12_DstPort |
| Proto | Proto_test |
| Tos | T11_Tos |
| SrcAS | T11_SrcAS |
| DstAS | T11_DstAS |

Dans l'étape 26, 26', l'unité de mesure de flux de Ei détecte la fin du flux sur des critères analogues à ceux des logiciels de type IPFIX, c'est-à-dire après un délai d'absence de paquets, ou encore dans le cas où la mémoire utilisée pour le stockage des descriptions de flux fait défaut.

Puis, l'unité de mesure regroupe les descriptions de flux dans des blocs de description de flux et les envoient vers l'unité de collecte à partir de l'adresse de gestion, notée Ei_SrcAddrMgt. L'adresse destination IP de tels tickets est Ei_DstAddrMgt.

Dans l'étape 27, le terminal 12 envoie à l'unité de collecte une description de flux de paquets reçus. Une telle description comprend préférablement les caractéristiques suivantes :

**Table 6**

| | |
|---|---|
| SrcAddr | T11_SrcAddr |
| DstAddr | T12_DstAddr |
| NextHop | 0 |
| Packets | T12_Size_Sk |
| Octets | T12_Sum_Sk |
| Packets list | T12_Sk |
| times | {T12_P1t0,... , T12_Pn-1t0} |
| SrcPort | T11_SrcPort |
| DstPort | T12_DstPort |
| Proto | Proto_test |
| Tos | T12_Tos |
| SrcAS | T12_SrcAS |
| DstAS | T12_DstAS |

Dans l'étape 28, l'unité de collecte 18 regroupe les tickets descriptions de flux de paquets du flux et les tickets de description du flux.

Pour les descriptions d'un flux de test reçues d'un équipement Ei, l'unité de collecte détermine, à partir de la valeur contenue dans le champ 'Packet' correspondant au nombre de paquets analysés et de la valeur contenue dans le champ 'Octet' correspondant à la somme des tailles des paquets analysés, le premier paquet analysé et lui associe comme référence temporelle de passage la valeur contenue dans le champ 'First'. L'unité de collecte détermine ensuite le dernier paquet analysé et lui associe comme référence temporelle de passage la valeur contenue dans le champ 'Last'.

Dans un mode de réalisation de l'invention, le terminal 11 émet un flux de paquets de tailles issues de la sous série d'ordre 3 de l'exemple précédemment énoncé. Cette série comprend les valeurs 14, 22, 30, 40, 55, 70, 100, 131, 155 et 189. Ce flux de paquets est émis dans l'ordre suivant, P0 étant le premier paquet émis et P9 le dernier paquet émis :
P0 est de taille 14 ;
P1 est de taille 189 ;
P2 est de taille 30 ;
P3 est de taille 155 ;
P4 est de taille 40 ;
P5 est de taille 70 ;
P6 est de taille 100 ;
P7 est de taille 22 ;
P8 est de taille 131 ; et
P9 est de taille 55.

Etant donné que la série considérée est une série d'ordre 3, l'unité de collecte dispose de préférence de deux tables. En effet, une première table comprend des sommes de deux éléments et une seconde table comprend des sommes de trois éléments. La première table comprend 45 éléments (C(10, 2) = 45) dont les éléments suivants, pour lesquels la somme des tailles précèdent l'ensemble des éléments qui lui correspondent :
203 : (P0, P1) ;
44: (P0, P2) ;
169 :(P0, P3) ;
....
219 : (P1, P2) ;
344 :(P1, P3) ;
...
153 :(P7, P8) ;
77: (P7, P9) ;
186 : (P8, P9).

La seconde table comprend 120 éléments (C(10, 3) = 120) dont les éléments suivants, pour lesquels la somme des tailles précèdent l'ensemble des éléments qui lui correspondent.
233 : (P0, P1, P2) ;
358 : (P0, P1, P3) ;
199 : (P0, P2, P3) ;
374 : (P1, P2, P3) ;
243 : (P0, P1, P4) ;
...
258 : (P0, P1, P9) ;
...
208 : (P7, P8, P9).

Ainsi, lorsque l'unité de collecte reçoit une description de flux d'une unité de mesure comprenant un nombre de paquets analysés égal à 3 et une somme des tailles des paquets analysés égale à 243, l'unité de collecte se reporte à la seconde table et identifie l'ensemble des 3 paquets analysés, et également parmi eux le premier et dernier paquet.

Dans un mode de réalisation de la présente invention, l'unité de collecte classe les sommes des tailles par ordre croissant afin d'accélérer la recherche.

De telles tables ont pour objectif de permettre de rechercher rapidement le sous-ensemble des paquets analysés dans la séquence. A cet effet, on peut mettre avantageusement en oeuvre une opération de hachage (en anglais, 'hash coding'). Dans ce cas, la table maintenue par l'unité de collecte est une table de hachage, dont le principe est bien connu de l'homme du métier. En fonction de la somme des tailles et d'une fonction de hash, on obtient un indice d'entrée dans la table.

Il est possible qu'un seul paquet ait été analysé. Si le nombre Ei_Size_Sk est égal à 1, cela signifie qu'un seul paquet a été analysé et de ce fait une seule référence temporelle de passage est disponible pour ce flux au niveau de l'équipement Ei.

Dans un mode de réalisation de l'invention, l'unité de collecte regroupe toutes les données de flux reçues sous la forme de la table suivante.

**Table 7**

| Champ | T11 | ... | Ei | Ei+1 | ... | T12 |
|---|---|---|---|---|---|---|
| SrcAddr | T11_SrcAddr | ... | T11_SrcAddr | T11_SrcAddr | ... | T11_SrcAddr |
| DstAddr | T12_DstAddr | ... | T12_DstAddr | T12_DstAddr | ... | T12_DstAddr |
| SrcPort | T11_SrcPort | ... | T11_SrcPort | T11_SrcPort | ... | T11_SrcPort |
| DstPort | T12_DstPort | ... | T12_DstPort | T12_DstPort | ... | T12_DstPort |
| Proto | Protocole_test | ... | Protocole_test | Protocole_test | ... | Protocole-test |
| Packets | n | ... | Ei_Size_Sk | Ei+1_Size_Sk | ... | T12_Size_Sk |
| Octets | T11_Sum_Sn | ... | Ei_Sum_Sk | Ei+1_Sum_Sk | ... | T12_Sum_Sk |
| NextHop | E1_Addr | ... | Ei+1_Addr | Ei+2_Addr | ... | 0 |
| Tos | T11_Tos | ... | Ei_Tos | Ei+1_Tos | ... | T12_Tos |
| SrcAS | T11_AS | ... | Ei_AS ou T11_AS | Ei_AS ou T11_AS | ... | 0 |
| DstAS | 0 | ... | Ei+1_AS ou T12_AS | Ei+2_AS ou T12_AS | ... | T12 as |
| Input | 0 | ... | Ei_in | Ei+1_in | ... | T12_in |
| Output | T11_out | ... | Ei_out | Ei+1_out | ... | 0 |
| SrcAddrMgt | T11_AddrMgt | ... | Ei_AddrMgt | Ei+1_AddrMgt | ... | T12_AddrMgt |
| P0_time | T11_P0t0 | ... | Ei_P0t0 ou 0 | Ei+1 P0t0 ou 0 | ... | T12_P0t0 ou perdu |
| P1_time | T11_P1t0 | ... | Ei_P1t0 ou 0 | Ei+1 _P1t0 ou 0 | ... | T12_P1t0 ou perdu |
| P2_time | T11_P2t0 | ... | Ei_P2t0 ou 0 | Ei+1_P2t0 ou 0 | ... | T12_P2t0 ou perdu |
| ... | ... | ... | ... | ... | ... | ... |
| Pn-1_time | T11_Pn-1t0 | ... | Ei_Pn-1t0 ou 0 | Ei+1_Pn1t0 ou 0 | ... | T12_Pn-1t0 ou perdu |

Dans l'étape 29, dans un mode de réalisation de l'invention, selon la configuration de l'unité de collecte, cette dernière peut fournir :
- des informations relatives au chemin des paquets du flux dans le réseau ;
- des informations relatives à la gestion des équipements du chemin du flux dans le réseau ;
- des informations relatives au traitement du flux dans les équipements du chemin ;
- des informations de performance du réseau relatives à une perte de paquets sur un segment entre un des terminaux et un équipement ou entre deux équipements et/ou à un délai de transmission de paquets relatif à un segment entre un des terminaux et un équipement ou entre deux équipements.

Elle peut aussi calculer des délais de transmission de paquets et des pertes de paquets sur le chemin complet du flux, comme illustré dans les exemples décrits dans les sections suivantes.

Les paquets P0 et P2 ont été analysés lors de leur passage en Ei+1 seulement. Le paquet Pn-1 a été analysé lors de son passage en Ei et en Ei+1, comme illustré dans la table ci-dessous.

**Table 8**

| NextHop | T11 | ... | Ei | Ei+1 | ... | T12 |
|---|---|---|---|---|---|---|
| PO | X | ... | X | - | ... | X |
| P1 | X | ... | - | - | ... | X |
| P2 | X | ... | X | - | ... | perdu |
| ... | ... | ... | ... | ... | ... | ... |
| Pn-1 | X | ... | X | X | ... | X |

A partir de l'étape 28, dans un mode de réalisation de l'invention, l'unité de collecte regroupe les informations de Next Hop des paquets analysés, comme illustré dans la table ci-dessous:

**Table 9**

| NextHop | T11 | ... | Ei | Ei+1 | ... | T12 |
|---|---|---|---|---|---|---|
| P0 | E1_Addr | ... | Ei_Addr | - | ... | 0 |
| P1 | E1_Addr | ... | - | - | ... | 0 |
| P2 | E1_Addr | ... | Ei_Addr | - | ... | - |
| ... | ... | ... | ... | ... | ... | ... |
| Pn-1 | E1_Addr | ... | Ei_Addr | Ei+1_Addr | ... | 0 |

L'unité de collecte fournit un vecteur instantané de NextHop du flux :
{E1_Addr, Ei_Addr, Ei+1_Addr, 0}.

Sur une période courte, la production de vecteurs instantanés de Next Hop lors des mesures successives détermine rapidement le Next Hop de chaque équipement Ei et donc le vecteur complet:
{T11_SrcAddr, E1_Addr, E2_Addr,..., Ei_Addr, Ei+1_Addr,..., Em_Addr, T12_DstAddr}.

Sur une période longue et après la détermination du vecteur complet de Next hop, la comparaison des vecteurs instantanés avec le vecteur complet permet de détecter très rapidement des modifications du chemin emprunté.

A partir de l'étape 28, dans un mode de réalisation de l'invention, l'unité de collecte 18 regroupe les adresses sources utilisées par les unités de mesure pour exporter les descriptions de flux vers l'unité de collecte, comme l'illustre la table ci-après.

**Table 10**

| SrcAddrMgt | T11 | Ei | Ei+1 | T12 |
|---|---|---|---|---|
| P0 | T11_AddrMgt | Ei_AddrMgt | - | T12_AddrMgt |
| P1 | T11_AddrMgt | - | - | T12_AddrMgt |
| P2 | T11_AddrMgt | Ei_AddrMgt | - | - |
| Pn-1 | T11_AddrMgt | Ei_AddrMgt | Ei+1_AddrMgt | T12_AddrMgt |

L'unité de collecte fournit un vecteur instantané d'adresse de gestion :
{T11_AddrMgt, Ei_AddrMgt, Ei+1 AddrMgt, T12_AddrMgt}.

Sur une période courte, la production de vecteurs instantanés d'adresse de gestion lors de mesures successives détermine rapidement l'adresse de gestion de chaque Ei et donc un vecteur complet:
{T11_AddrMgt, E1_AddrMgt,..., Ei_AddrMgt, Ei+1_AddrMgt,..., Em_AddrMgt, T12_AddrMgt}.

A partir de l'étape 28, dans un mode de réalisation de l'invention, l'unité de collecte regroupe les informations de AS des paquets analysés, comme l'illustre les tables ci-après, pour les AS source et les AS destination.

**Table 11**

| SrcAS | T11 | Ei | Ei+1 | T12 |
|---|---|---|---|---|
| P0 | T11_AS | Ei_AS | - | - |
| P1 | T11_AS | - | - | - |
| P2 | T11_AS | Ei_AS | - | - |
| Pn-1 | T11_AS | Ei_AS | Ei+1_AS | - |

**Table 12**

| DstAS | PMAI | Ei | Ei+1 | T12 |
|---|---|---|---|---|
| P0 | - | Ei+1_AS | - | T12_AS |
| P1 | - | - | - | T12_AS |
| P2 | - | Ei+1_AS | - | - |
| Pn-1 | - | Ei+1_AS | T12_AS | T12_AS |

L'unité de collecte fournit un vecteur instantané de domaines administratifs :
{T11_AS, Ei_AS, Ei+1_AS, T12_AS}.

Sur une période courte, la production de vecteurs instantanés de domaines administratifs lors des mesures successives détermine rapidement les domaines administratifs source et destination de ce flux dans chaque équipement Ei. On obtient ainsi un vecteur complet :
{T11_AS, E1_AS, ..., Ei_AS, Ei+1_AS, ..., T12 AS}.

Sur une période longue et après la mesure du vecteur complet, la comparaison des vecteurs instantanés avec le vecteur complet permet de détecter immédiatement des modifications du chemin emprunté.

Le champ ToS ou encore QoS détermine le niveau de priorité d'un paquet dans une file d'attente d'un routeur (ou autre équipement). Cette information est très importante, notamment en inter domaine, pour la vérification de la mise en place des dispositifs de marquage de la qualité de service.

A partir de l'étape 28, dans un mode de réalisation, l'unité de collecte regroupe les informations de QoS des paquets analysés, comme illustré dans la table ci-dessous.

**Table 13**

| QoS | T11 | Ei | Ei+1 | T12 |
|---|---|---|---|---|
| P0 | T11_QoS | Ei_QoS | - | 0 |
| P1 | T11_QoS | - | - | 0 |
| P2 | T11_QoS | Ei_QoS | - | - |
| Pn-1 | T11_QoS | Ei_QoS | Ei+1_QoS | T12_QoS |

L'unité de collecte 18 fournit un vecteur instantané de QoS :
{T11_QoS, Ei_QoS, Ei+1_QoS, T12_QoS}.

Sur une période courte, la production de vecteurs instantanés de champs QoS, lors des mesures successives, détermine rapidement le champ QoS de chaque Ei et donc un vecteur complet :
{T11_QoS, E1_QoS, ..., Ei_QoS, Ei+1_QoS, ..., T12_QoS}.

Sur une période longue et après la mesure du vecteur complet, la comparaison des vecteurs instantanés avec le vecteur complet permet de détecter immédiatement des modifications du champ Qos du flux. Cette comparaison permet notamment de vérifier que le champ QoS n'a pas changé même si le chemin a changé.

A partir de l'étape 28, dans un mode de réalisation, l'unité de collecte regroupe les références temporelles de passage instantanés de chaque paquet analysé:

**Table 14**

| Référence temporelle de passage | T11 | Ei | Ei+1 | T12 |
|---|---|---|---|---|
| P0_time | T11_P0t0 | Ei_P0t0 | - | T12_P0t0 |
| P1_time | T11_P1t0 | - | - | T12_P1t0 |
| P2_time | T11_P2t0 | Ei_P2t0 | - | - |
| Pn-1_time | T11_Pn-1t0 | Ei_Pn-1t0 | Ei+1_Pn-1t0 | T12_Pn-1t0 |

Ensuite, l'unité de collecte calcule des délais instantanés entre les différents points du réseau où le même paquet Pi a été analysé. La table ci-dessous détaille les délais par segment, relatif à chaque paquet.

**Table 15**

| Delai | T11 ->Ei | Ei -> Ei+1 | Ei+1 -> T12 |
|---|---|---|---|
| P0 | Ei_P0t0-T11_P0t0 | - | - |
| P1 | - | - | - |
| P2 | Ei_P2t0-T11_P2t0 | - | - |
| Pn-1 | Ei_Pn-1t0 - T11_Pn-1t0 | Ei+1_Pn-1t0- Ei_Pnt0 | T12_Pn-1t0 - Ei+1_Pn-1t0 |

Un paquet n'est pas analysé systématiquement par tous les équipements Ei.

L'analyse du paquet Pn-1 permet à l'unité de collecte de fournir un vecteur de délai de transmission instantané du chemin complet entre les terminaux 11 et 12.

{Ei_Pn-1t0 - T11_Pn-1t0, Ei+1_Pn-1t0- Ei_Pn-1t0, T12_Pn-1t0 - Ei+1_Pn-1t0}.

L'analyse des paquets P0 et P2 permet une seule mesure intermédiaire entre les terminaux 11 et 12.

Ces calculs de délais sont très utiles pour, notamment, localiser des congestions dans le réseau.

L'analyse des paquets P0, P2 et Pn-1 permet de calculer rapidement une moyenne, ainsi qu'une valeur minimale et une valeur maximale, du délai de transmission entre le terminal 11 et l'équipement Ei+1.

De la même manière, l'analyse des paquets P0, P1 et Pn-1 permet de calculer très rapidement une moyenne du délai de transmission entre l'équipement Ei+1 et le terminal 12.

Sur une période courte, la production de vecteurs instantanés de délai de transmission, lors des mesures successives, détermine rapidement des vecteurs complets des délais de transmission relatifs aux segments du chemin du flux.

Sur une période longue et après la mesure de vecteurs complets, la comparaison des vecteurs complets et des vecteurs instantanés permet de localiser très rapidement les segments dont les délais de transmission, et donc la performance, se dégrade si le chemin est inchangé. Cela permet également de comparer la performance de deux chemins différents.

On notera que le délai de transmission d'un paquet est fonction de plusieurs paramètres dont la taille du paquet. En effet, un paquet de taille relativement grande présente un délai de transmission plus important qu'un paquet de taille relativement petite, la transmission des deux paquets étant réalisée dans un environnement équivalent. Ainsi, afin de pouvoir exploiter avec plus de précisions des délais de transmission instantanés, dans un mode de réalisation de l'invention, un délai instantané calculé pour un paquet de test donné est rapporté à la taille de ce paquet de test.

A partir de l'étape 28, dans un mode de réalisation, l'unité de collecte produit des vecteurs de perte de paquets.

Le tableau ci-dessous représente des pertes de paquets relatives aux différents segments du chemin du flux de paquets.

**Table 16**

| Pertes | T11 | Ei | Ei+1 | T12 |
|---|---|---|---|---|
| P0 | 0 | 0 | 1 | 0 |
| P1 | 0 | 1 | 1 | 0 |
| P2 | 0 | 0 | 1 | 1 |
| Pn-1 | 0 | 0 | 0 | 0 |
| TOTAL | 0 | 1 | 3 | 1 |

Dans le tableau ci-dessus '1' signifie que le paquet a été perdu ou n'a pas été analysé et '0' signifie que le paquet a été analysé. Les pertes ne sont pas comptabilisables directement par segment. En effet, un ou plusieurs paquets d'un même flux peuvent transités par différents équipements, notamment lorsqu'une répartition de charge est réalisée sur le chemin du flux. De ce fait, afin de confirmer une perte de paquet, il faut se référer aux paquets reçus sur le terminal 12.

Le vecteur de perte relatif au paquet P1, noté {0, 1, 1,0 }, illustre qu'un paquet non analysé en Ei ne signifie pas que le paquet est perdu avant l'équipement Ei. Cela signifie soit que le paquet a été perdu, soit qu'il n'a pas été sélectionné par l'analyseur de Ei, soit que le paquet a transité par un autre équipement. Par exemple, Ei et Ei+1 ne savent pas que le paquet P1 a existé alors qu'il a probablement transité par eux puisqu'il est arrivé au terminal destinataire 12.

Le vecteur de perte relatif au paquet P2, noté {0, 0, 1, 1}, indique que le paquet P2 est probablement perdu entre Ei et le terminal destinataire 12 parce qu'il n'a pas été reçu par le terminal 12 et que Ei l'a analysé.

Dans certains cas, il est avantageux d'introduire une unité de collecte comprenant deux modules dans l'architecture du réseau décrite précédemment. Par exemple, dans le cas où un premier module d'une unité de collecte est adapté pour recevoir et gérer des descriptions de flux émises par les unités de mesure, mais n'est pas adapté pour recevoir des descriptions de flux de paquets depuis les terminaux. On adjoint alors un second module pour recevoir les descriptions de flux de paquets.

La figure 3 illustre un procédé selon un mode de réalisation de l'invention dans une telle architecture. Le procédé comprend alors les étapes suivantes :
- étape 302 : Envoi au terminal 11 et au second module 301 d'un message de demande de mise en copie des description de flux de test entre les terminaux 11 et 12, correspondant à une début de mesure, par le premier module 300;
- étape 21 : Envoi de la séquence de paquets de test du terminal 11 au terminal 12;
- étape 22, 22' : Sélection des paquets de test et analyse du flux sur la base des paquets sélectionnés par les unités de mesure des équipements Ei ;
- étape 23, 23' : Analyse des paquets sélectionnés et classement dans une entrée correspondant au flux de la table des caractéristiques de flux, puis stockage d'une référence temporelle de passage du premier et du dernier paquet analysé dans les champs notés 'First' et 'Last';
- étape 24 : Réception de la séquence de paquets de test par le terminal 12;
- étape 25 : Envoi de la description de flux de paquets par le terminal 11 vers le premier module 300;
- étape 26, 26' : Sur détection de fin de flux (inactivité du flux par exemple), exportation des descriptions de flux par les équipements Ei vers le second module 301 ;
- étape 27 : Envoi de la description de flux de paquets par le terminal 12 vers le premier module 300;
- étape 303 : Transmission au fil de l'eau des descriptions de flux entre les terminaux 11 et 12 par le second module 301 au premier module 300;
- étape 304 : Regroupement et corrélation des données relatives à ce flux par le premier module 300;
- étape 305 : Production des vecteurs des informations relatifs à des équipements du chemin du flux ou à des segments du chemin empruntés par les paquets de ce flux ou encore relatifs au chemin complet par le premier module 300.

De préférence, dans une configuration dans laquelle l'unité de collecte comprend deux modules 300 et 301, le module 300 de l'unité de collecte comprend un filtrage en entrée permettant de filtrer seulement les informations relatives aux flux étudiés.

Dans un mode de réalisation de l'invention, un ticket de description de flux comprend en outre un champ 'TTL', pour Time To Live. Une telle information est classiquement comprise dans un champ d'un en-tête de paquet de type IP. En exportant cette information, l'unité de collecte est ainsi capable d'ordonnancer très facilement les équipements Ei sur le chemin du flux.

La présente invention s'avère être très avantageuse dans tous les domaines de la métrologie des réseaux de transmission de paquets, notamment pour le dimensionnement du réseau, ainsi que pour la mise en service et la maintenance du réseau et pour le contrôle de la qualité de service fournie. En effet, en cas de détection de problèmes de transmission « de bout en bout », un mode de réalisation de l'invention permet de localiser très rapidement le ou les segments du chemin complet qui sont à l'origine des problèmes, sur la base de mesures très précises et fiables. En outre, les mesures fournies sont disponibles et exploitables très rapidement. De plus, un mode de réalisation de l'invention est très facile à mettre en oeuvre dans des réseaux existants.

On note en outre qu'il est aisé de déduire de la présente description un mode de réalisation de la présente invention dans lequel un terminal émet le flux de paquets à destination de plusieurs terminaux. Ainsi, le procédé de mesure selon un mode de réalisation de l'invention peut être appliqué aisément à une transmission à destination multiple, ou 'multicast' en anglais.

Dans un tel cas, il est possible de prévoir que tout ou partie des terminaux récepteurs du flux de paquets émis envoie une description de flux de paquets reçus à l'unité de collecte.

Dans le cas où l'unité de collecte reçoit plusieurs descriptions de flux de paquets reçus, elle peut par exemple en déduire le nombre de terminaux récepteurs qui ont effectivement reçu le flux diffusé en 'multicast'.

Dans un autre mode de réalisation de la présente invention, la fonction de l'unité de collecte telle qu'énoncée précédemment peut être avantageusement remplie par une pluralité d'entités agencées dans une architecture hiérarchisée. Dans une telle architecture, une unité de collecte comprend une pluralité d'entités de collecte et une entité centrale.

Le terminal et l'unité de mesure sont alors reliés à au moins une des entités de collecte.

Ainsi, par exemple, un terminal peut envoyer des descriptions de flux de paquets à une des entités de collecte et une unité de mesure peut envoyer des descriptions de flux à une autre entité de collecte. Puis, chacune de ces entités de collecte peuvent ensuite transmettre les descriptions reçues à l'entité centrale, laquelle identifie chaque paquet analysé du flux en fonction de la description de flux pour corréler, paquet par paquet, la description de flux et la description de flux de paquets ainsi reçues.

## Revendications

1. Procédé de mesure dans un réseau de transmission de paquets de données, dans lequel un flux de paquets de données émis par un premier terminal (11) transite via au moins un équipement de réseau (13) auquel est associée une unité de mesure de flux ; dans lequel ledit premier terminal (11) et ladite unité de mesure sont reliés à une unité de collecte (18) ; ledit procédé comprenant les étapes suivantes :
- le premier terminal (11) émet un flux spécifique de paquets (21), ayant chacun une taille déterminée différente, les tailles étant telles que parmi un ensemble de r paquets, r étant un entier positif inférieur ou égal au nombre de paquets du flux, il n'y ait pas deux sous-ensembles composés du même nombre de paquets et ayant la même taille totale cumulée ;
- l'unité de mesure analyse au moins un paquet et au plus r paquets dudit flux transitant par l'équipement de réseau ;
- le premier terminal (11) envoie une description de flux de paquets émis (25,27), comprenant une liste incluant au moins lesdites tailles déterminées des paquets émis, à l'unité de collecte ;
- l'unité de mesure de flux envoie une description de flux (26), comprenant au moins le nombre de paquets analysés et une somme desdites tailles déterminées des paquets analysés, à l'unité de collecte (18) ; et
- l'unité de collecte (18) identifie chaque paquet analysé du flux en fonction de la description de flux et desdites tailles déterminées des paquets émis pour corréler (28), paquet par paquet, ladite description de flux et ladite description de flux de paquets émis.

2. Procédé selon la revendication 1, suivant lequel au moins un deuxième terminal (12) relié à l'unité de collecte (18) reçoit le flux de paquets et envoie une description de flux de paquets reçus, comprenant le nombre de paquets reçus, à l'unité de collecte ; et
dans lequel l'unité de collecte identifie chaque paquet analysé pour corréler, paquet par paquet, la description de flux et les descriptions de flux de paquets.

3. Procédé selon l'une quelconque des revendications précédentes, dans lequel l'unité de collecte (18) détermine une perte de paquets relative à un segment entre le premier terminal et l'équipement par corrélation (28) de la liste relative aux paquets émis et des paquets analysés.

4. Procédé selon l'une quelconque des revendications 2 à 3, dans lequel l'unité de collecte (18) détermine une perte de paquets relative à un segment entre l'équipement et le second terminal par corrélation (28) de la liste relative aux paquets reçus et des paquets analysés.

5. Procédé selon l'une quelconque des revendications 2 à 4,
dans lequel les descriptions de flux de paquets (25,27) comprennent une référence temporelle d'émission par le premier terminal et/ou de réception par le second terminal, de chaque paquet du flux, et les descriptions de flux (26) comprennent en outre une référence temporelle du passage par l'équipement du premier et du dernier paquet analysé,
et dans lequel l'unité de collecte (18) détermine un délai de transmission desdits premier et dernier paquets analysés, relativement à un segment entre un terminal et l'équipement, par corrélation (28) desdites références temporelles des paquets.

6. Procédé selon l'une quelconque des revendications précédentes, dans lequel le premier terminal génère et/ou mémorise plusieurs flux spécifiques ; et
dans lequel l'étape d'émission de flux est précédée d'une étape de sélection de flux.

7. Procédé selon l'une quelconque des revendications précédentes, dans lequel l'unité de collecte génère un ou plusieurs flux spécifiques et envoie lesdits flux générés au premier terminal (11) en fonction de critères déterminés.

8. Procédé selon l'une des revendications précédentes, dans lequel l'unité de collecte génère des tables d'identification de paquets en fonction du ou des flux spécifiques pour identifier les paquets analysés dans le flux spécifique.

9. Procédé selon l'une quelconque des revendications précédentes, dans lequel une pluralité d'équipements de réseau (13,15,16) sont prévus avec des unités de mesure respectives, et dans lequel l'unité de collecte (18) fournit au moins une des informations instantanées suivantes :
- des informations relatives au chemin des paquets du flux dans le réseau ;
- des informations relatives à la gestion des équipements du chemin du flux dans le réseau ;
- des informations relatives au traitement du flux dans les équipements du chemin ;
- des informations de performance du réseau relatives à une perte de paquets sur un segment entre un terminal et un équipement ou entre deux équipements ;
- des informations de performance du réseau relatives à un délai de transmission de paquets relatif à un segment entre un terminal et un équipement ou entre deux équipements ;
- des informations de performance du réseau relatives à une variation de délai de transmission de paquets relatif à un segment entre un terminal et un équipement ou entre deux équipements.

10. Procédé selon l'une quelconque des revendications précédentes, dans lequel l'unité de mesure analyse un sous ensemble de paquets du flux sélectionnés parmi les paquets du flux reçus par l'équipement.

11. Procédé selon l'une quelconque des revendications précédentes, dans lequel l'unité de mesure fournit par itération des étapes du procédé selon la revendication 1 au moins une statistique des mesures suivantes relative à un segment entre un terminal et un équipement ou entre deux équipements :
- une perte de paquets;
- un délai de transmission de paquets ; et
- une variation de délai de transmission.

12. Unité de collecte agencée pour coopérer, dans un réseau de transmission de paquets de données,
avec un terminal (11) agencé pour émettre un flux spécifique de paquets (21), ayant chacun une taille déterminée différente, les tailles étant telles que parmi un ensemble de r paquets, r étant un entier positif inférieur ou égal au nombre de paquets du flux, il n'y ait pas deux sous-ensembles composés du même nombre de paquets et ayant la même taille totale cumulée et
avec une unité de mesure agencée pour analyser au moins un paquet et au plus r paquets dudit flux spécifique,
ladite unité de collecte comprenant :
- des moyens de collecte (300), depuis le terminal, d'au moins une description dudit flux, ladite description de flux comprenant une liste incluant au moins les tailles déterminées de paquets émis;
- des moyens de collecte (301) d'au moins une description de flux reçue depuis l'unité de mesure, une description de flux comprenant au moins le nombre de paquets analysés et une somme de tailles déterminées de paquets analysés ;
- des moyens de corrélation (300) agencés pour identifier chaque paquet analysé du flux en fonction de la description de flux et des tailles déterminées des paquets émis, et pour corréler, paquet par paquet, des descriptions de flux et des descriptions de flux de paquets.

13. Terminal agencé pour coopérer, dans un réseau de transmission de paquets de données,
avec une unité de collecte selon la revendication 12 et
avec une unité de mesure agencée pour analyser au moins un paquet et au plus r paquets d'un flux spécifique, et pour envoyer une description dudit flux, comprenant au moins le nombre de paquets analysés et une somme desdites tailles déterminées des paquets analysés, à l'unité de collecte le terminal comprenant :
- des moyens de génération du flux spécifique, les paquets du flux spécifique ayant chacun une taille déterminée différente, les tailles étant telles que parmi un ensemble de r paquets, r étant un entier positif inférieur ou égal au nombre de paquets du flux, il n'y ait pas deux sous ensembles composés du même nombre de paquets et ayant la même taille totale cumulée ; et
- des moyens d'envoi à l'unité de collecte d'une description de flux de paquets émis comprenant une liste incluant au moins lesdites tailles déterminées des paquets émis, de façon à permettre à l'unité de collecte de corréler, paquet par paquet, ladite description de flux et ladite description de flux de paquets émis.

14. Système de mesure dans un réseau de transmission de paquets de données comprenant :
- au moins un terminal selon la revendication 13 ;
- une unité de collecte selon la revendication 12 ; et
- au moins une unité de mesure associée à un équipement du réseau comprenant des moyens d'analyse d'au moins un paquet et au plus r paquets du flux, r étant un entier positif inférieur ou égal au nombre de paquets du flux, et des moyens d'envoi à ladite unité de collecte d'une description de flux, comprenant au moins le nombre de paquets analysés et une somme des tailles déterminées des paquets analysés

## Patentansprüche

1. Messverfahren in einem Übertragungsnetz für Datenpakete, wobei ein Datenpaketstrom, der von einem ersten Endgerät (11) gesendet wird, über mindestens eine Netzwerkgerät (13), mit dem eine Einheit zum Messen des Stroms verbunden ist, übertragen wird; wobei das erste Endgerät (11) und die Messeinheit mit einer Erfassungseinheit (18) verbunden sind; wobei das Verfahren folgende Schritte aufweist:
- das erste Endgerät (11) sendet einen spezifischen Strom von Paketen (21) aus, von denen jedes eine unterschiedliche festgelegte Größe aufweist, wobei die Größen derart sind, dass aus einer Gesamtheit von r Paketen r eine positive ganze Zahl kleiner oder gleich der Anzahl der Pakete des Stroms ist, so dass es keine zwei Untereinheiten gibt, die aus der gleichen Anzahl von Paketen bestehen und die die gleiche kumulierte Gesamtgröße aufweisen;
- die Messeinheit analysiert mindestens ein Paket und höchstens r Pakete des Stroms, der durch das Netzwerkgerät übertragen wird;
- das erste Endgerät (11) schickt eine Beschreibung des Stroms der gesendeten Pakete (25, 27), die eine Liste umfasst, die mindestens die festgelegten Größen der gesendeten Pakete aufweist, an die Erfassungseinheit;
- die Einheit zum Messen des Stroms schickt eine Beschreibung des Stroms (26), die mindestens die Anzahl der analysierten Pakete und eine Summe der festgelegten Größen der analysierten Pakete umfasst, an die Erfassungseinheit (18); und
- die Erfassungseinheit (18) identifiziert jedes analysierte Paket des Stroms entsprechend der Beschreibung des Stroms und der festgelegten Größen der gesendeten Pakete, um Paket für Paket die Beschreibung des Stroms und die Beschreibung des Stroms der gesendeten Pakete in Korrelation (28) zu bringen.

2. Verfahren nach Anspruch 1, wobei mindestens ein zweites Endgerät (12), das mit der Erfassungseinheit (18) verbunden ist, den Paketstrom empfängt und eine Beschreibung des Stroms der empfangenen Pakete, welche die Anzahl der empfangenen Pakete umfasst, an die Erfassungseinheit sendet; und
wobei die Erfassungseinheit jedes analysierte Paket identifiziert, um Paket für Paket die Beschreibung des Stroms und die Beschreibungen der Paketströme in Korrelation zu bringen.

3. Verfahren nach einem der vorhergehenden Ansprüche, wobei die Erfassungseinheit (18) einen Paketverlust betreffend ein Segment zwischen dem ersten Endgerät und dem Gerät durch Korrelation (28) der Liste über die gesendeten Pakete und der analysierten Pakete festlegt.

4. Verfahren nach einem der Ansprüche 2 bis 3, wobei die Erfassungseinheit (18) einen Paketverlust betreffend ein Segment zwischen dem Gerät und dem zweiten Endgerät durch Korrelation (28) der Liste über die empfangenen Pakete und der analysierten Pakete festlegt.

5. Verfahren nach einem der Ansprüche 2 bis 4,
wobei die Beschreibungen der Paketströme (25, 27) einen zeitlichen Bezug der Sendung jedes Pakets des Stroms durch das erste Endgerät und/oder des Empfangs durch das zweite Endgerät aufweist, und die Beschreibungen des Stroms (26) weisen ferner einen zeitlichen Bezug des Durchlaufs des ersten und des letzten analysierten Pakets durch das Gerät auf,
und wobei die Erfassungseinheit (18) eine Frist für die Übermittlung der ersten und letzten analysierten Pakete bezüglich eines Segments zwischen einem Endgerät und des Geräts durch Korrelation (28) der zeitlichen Bezüge der Pakete festlegt.

6. Verfahren nach einem der vorhergehenden Ansprüche, wobei das erste Endgerät mehrere spezifische Ströme erzeugt und/oder speichert; und
wobei vor dem Schritt des Sendens des Stroms ein Schritt der Auswahl des Stroms erfolgt.

7. Verfahren nach einem der vorhergehenden Ansprüche, wobei die Erfassungseinheit einen oder mehrere spezifische Ströme erzeugt und die erzeugten Ströme entsprechend bestimmter Kriterien an das erste Endgerät (11) sendet.

8. Verfahren nach einem der vorhergehenden Ansprüche, wobei die Erfassungseinheit Tabellen zur Identifikation der Pakete entsprechend des oder der spezifischen Ströme erzeugt, um die in dem spezifischen Strom analysierten Pakete zu identifizieren.

9. Verfahren nach einem der vorhergehenden Ansprüche, wobei mehrere Netzwerkgeräte (13, 15, 16) mit jeweiligen Messeinheiten vorgesehen sind und wobei die Erfassungseinheit (18) mindestens eine der folgenden Sofortinformationen liefert:
- Informationen über den Weg der Pakete des Stroms in dem Netz;
- Informationen über die Steuerung der Geräte des Wegs des Stroms in dem Netz;
- Informationen über die Verarbeitung des Stroms in den Geräten des Wegs;
- Informationen über die Leistung des Netzes betreffend einen Paketverlust in einem Segment zwischen einem Endgerät und einem Gerät oder zwischen zwei Geräten;
- Informationen über die Leistung des Netzes betreffend eine Frist zur Übertragung von Paketen betreffend ein Segment zwischen einem Endgerät und einem Gerät oder zwischen zwei Geräten;
- Informationen über die Leistung des Netzes betreffend eine Abweichung der Frist zur Übertragung von Paketen betreffend ein Segment zwischen einem Endgerät und einem Gerät oder zwischen zwei Geräten.

10. Verfahren nach einem der vorhergehenden Ansprüche, wobei die Messeinheit eine Untergruppe von Paketen des Stroms, die aus den von dem Gerät empfangenen Paketen des Stroms ausgewählt werden, analysiert.

11. Verfahren nach einem der vorhergehenden Ansprüche, wobei die Messeinheit durch iterative Berechnung der Schritte des Verfahrens nach Anspruch 1 mindestens eine Statistik der folgenden Messungen betreffend ein Segment zwischen einem Endgerät und einem Gerät oder zwischen zwei Geräten liefert:
- einen Paketverlust;
- eine Frist für die Übertragung von Paketen; und
- eine Schwankung der Übertragungsfrist.

12. Erfassungseinheit, die angeordnet ist, um in einem Netz zur Übertragung von Datenpaketen,
mit einem Endgerät (11) zusammenzuwirken, welches angeordnet ist, um einen spezifischen Strom von Paketen (21), die jeweils eine unterschiedliche bestimmte Größe aufweisen, zu senden, wobei die Größen derart sind, dass aus einer Gesamtheit von r Paketen r eine positive ganze Zahl kleiner oder gleich der Anzahl der Pakete des Stroms ist, so dass es keine zwei Untereinheiten gibt, die aus der gleichen Anzahl von Paketen bestehen und die die gleiche kumulierte Gesamtgröße aufweisen, und
mit einer Messeinheit, die angeordnet ist, um mindestens ein Paket und höchstens r Pakete des spezifischen Stroms zu analysieren,
wobei die Erfassungseinheit Folgendes aufweist:
- Mittel (300) zur Erfassung vom Endgerät aus von mindestens einer Beschreibung des Stroms, wobei die Beschreibung des Stroms eine Liste umfasst, die mindestens die festgelegten Größen von gesendeten Paketen aufweist;
- Mittel (301) zur Erfassung mindestens einer von der Messeinheit empfangenen Beschreibung des Stroms, wobei eine Beschreibung des Stroms mindestens die Anzahl der analysierten Pakete und eine Summe von festgelegten Größen von analysierten Paketen umfasst;
- Korrelationsmittel (300), die angeordnet sind, um jedes analysierte Paket des Stroms entsprechend der Beschreibung des Stroms und der festgelegten Größen der gesendeten Pakete zu identifizieren, um Paket für Paket Beschreibungen von Strömen und Beschreibungen von Paketströmen in Korrelation zu bringen.

13. Endgerät, das angeordnet ist, um in einem Netz zur Übertragung von Datenpaketen
mit einer Erfassungseinheit nach Anspruch 12 zusammenzuwirken sowie
mit einer Messeinheit, die angeordnet ist, um mindestens ein Paket und höchstens r Pakete eines spezifischen Stroms zu analysieren und um der Erfassungseinheit eine Beschreibung des Stroms zu senden, welcher mindestens die Anzahl der analysierten Pakete und eine Summe der festgelegten Größen der analysierten Pakete aufweist, wobei das Endgerät Folgendes umfasst:
- Mittel zur Erzeugung des spezifischen Stroms, wobei die Pakete des spezifischen Stroms jeweils eine unterschiedliche bestimmte Größe aufweisen, wobei die Größen derart sind, dass aus einer Gesamtheit von r Paketen r eine positive ganze Zahl kleiner oder gleich der Anzahl der Pakete des Stroms ist, so dass es keine zwei Untereinheiten gibt, die aus der gleichen Anzahl von Paketen bestehen und die die gleiche kumulierte Gesamtgröße aufweisen; und
- Mittel zum Senden einer Beschreibung des Stroms von gesendeten Paketen an die Erfassungseinheit, umfassend eine Liste, die mindestens die festgelegten Größen der gesendeten Pakete aufweist, damit die Erfassungseinheit Paket für Paket die Beschreibung des Stroms und die Beschreibung des Storms der gesendeten Pakete in Korrelation bringen kann.

14. System zur Messung in einem Netz zur Übertragung von Datenpaketen, umfassend:
- mindestens ein Endgerät nach Anspruch 13;
- eine Erfassungseinheit nach Anspruch 12; und
- mindestens eine Messeinheit, die mit einem Gerät des Netzwerks verbunden ist, umfassend Mittel zur Analyse von mindestens einem Paket und höchstens r Paketen des Stroms, wobei r eine positive ganze Zahl kleiner oder gleich der Anzahl der Pakete des Stroms ist, und Mittel zum Senden einer Beschreibung des Stroms an die Erfassungseinheit, umfassend mindestens die Anzahl der analysierten Pakete und eine Summe der festgelegten Größen der analysierten Pakete.

## Claims

1. Measurement method for use in a data packet transmission network, wherein a stream of packets of data sent by a first terminal (11) passes in transit through at least one network equipment (13) with which there is associated a stream measurement unit; wherein said first terminal (11) and said measurement unit are connected to a collection unit (18); said method comprising the following steps:
- the first terminal (11) sends a specific stream of packets (21), each having a different particular size, the sizes being such that in a set of r packets, r being a positive integer less than or equal to the number of packets of the stream, there are not two subsets comprising the same number of packets and having the same cumulative total size;
- the measurement unit analyzes at least one packet and at most r packets of said stream passing in transit through the network equipment;
- the first terminal (11) sends the collection unit a sent packet stream description (25, 27), comprising a list including at least said particular sizes of the packets sent;
- the stream measurement unit sends the collection unit (18) a stream description (26) comprising at least the number of packets analyzed and a sum of said particular sizes of the packets analyzed; and
- the collection unit (18) identifies each analyzed packet of the stream as a function of the stream description and of said particular sizes of the packets sent in order to correlate (28) said stream description and said sent packet stream description packet by packet.

2. Method according to Claim 1, wherein at least one second terminal (12) connected to the collection unit (18) receives the stream of packets and sends a received packet stream description comprising the number of packets received to the collection unit; and wherein the collection unit identifies each packet analyzed in order to correlate the stream description and the packet stream descriptions packet by packet.

3. Method according to either of the preceding claims, wherein the collection unit (18) determines a loss of packets relating to a segment between the first terminal and the equipment by correlation (28) of the list relating to the packets sent and the packets analyzed.

4. Method according to either of Claims 2 and 3, wherein the collection unit (18) determines a loss of packets relating to a segment between the equipment and the second terminal by correlation (28) of the list relating to the packets received and the packets analyzed.

5. Method according to any one of Claims 2 to 4, wherein the packet stream descriptions (25, 27) comprise a time reference of sending by the first terminal and/or of reception by the second terminal for each packet of the stream and the stream descriptions (26) further comprise a time reference for the passage through the equipment of the first and last packets analyzed,
and wherein the collection unit (18) determines a transmission time of said first and last packets analyzed relating to a segment between a terminal and the equipment by correlation (28) of said time references of the packets.

6. Method according to any one of the preceding claims, wherein the first terminal generates and/or stores a plurality of specific streams; and
wherein the stream sending step is preceded by a stream selection step.

7. Method according to any one of the preceding claims, wherein the collection unit generates one or more specific streams and sends the generated streams to the first terminal (11) as a function of particular criteria.

8. Method according to any one of the preceding claims, wherein the collection unit generates packet identification tables as a function of the specific stream or streams in order to identify the packets analyzed in the specific stream.

9. Method according to any one of the preceding claims, wherein a plurality of network equipments (13, 15, 16) is provided with respective measurement units and wherein the collection unit (18) supplies at least one of the following kinds of information instantaneously:
- information relating to the path of the packets of the stream in the network;
- information relating to management of the equipments of the path of the stream in the network;
- information relating to processing of the stream in the equipments of the path;
- network performance information relating to a loss of packets on a segment between a terminal and an equipment or between two equipments;
- network performance information relating to a packet transmission time relating to a segment between a terminal and an equipment or between two equipments;
- network performance information relating to a packet transmission time variation relating to a segment between a terminal and an equipment or between two equipments.

10. Method according to any one of the preceding claims, wherein the measurement unit analyzes a subset of packets of the stream selected from the packets of the stream received by the equipment.

11. Method according to any one of the preceding claims, wherein the measurement unit supplies by iteration of the steps of the method according to Claim 1 at least one statistic of the following measurements relating to a segment between a terminal and an equipment or between two equipments:
- a loss of packets;
- a packet transmission time; and
- a transmission time variation.

12. Collection unit adapted to cooperate, in a data packet transmission network,
with a terminal (11) adapted to send a specific stream of packets (21), each having a different particular size, the sizes being such that in a set of r packets, r being a positive integer less than or equal to the number of packets of the stream, there are not two subsets comprising the same number of packets and having the same cumulative total size, and
with a measurement unit adapted to analyze at least one packet and at most r packets of said specific stream, said collection unit comprising:
- means (300) for collecting, from the terminal, at least one description of said stream, said stream description comprising a list including at least the particular sizes of the packets sent;
- means (301) for collecting at least one stream description received from the measurement unit, a stream description comprising at least the number of packets analyzed and a sum of particular sizes of packets analyzed;
- correlation means (300) adapted to identify each packet analyzed of the stream as a function of the stream description and of the particular sizes of the packets sent, and to correlate stream descriptions and packet stream descriptions packet by packet.

13. Terminal adapted to cooperate, in a data packet transmission network,
with a collection unit according to Claim 12 and
with a measurement unit adapted to analyze at least one packet and at most r packets of a specific stream and to send a description of said stream, comprising at least the number of packets analyzed and a sum of said particular sizes of the packets analyzed, to the collection unit, the terminal comprising:
- means for generating the specific stream, the packets of the specific stream each having a different particular size, the sizes being such that in a set of r packets, r being a positive integer less than or equal to the number of packets of the stream, there are not two subsets comprising the same number of packets and having the same cumulative total size; and
- means for sending to the collection unit a sent packet stream description comprising a list including at least said particular sizes of the packets sent, so as to enable the collection unit to correlate said stream description and said sent packet stream description packet by packet.

14. Measurement system for use in a data packet transmission network comprising:
- at least one terminal according to Claim 13;
- a collection unit according to Claim 12; and
- at least one measurement unit associated with an equipment of the network comprising means for analyzing at least one packet and at most r packets of the stream, r being a positive integer less than or equal to the number of packets of the stream, and means for sending said collection unit a stream description comprising at least the number of packets analyzed and a sum of the particular sizes of the packets analyzed.
